(19) Europäisches Patentamt
European Patent Office
Office européen des brevets

(11) **EP 4 331 787 A2**

(12) **EUROPEAN PATENT APPLICATION**

(43) Date of publication:
**06.03.2024 Bulletin 2024/10**

(21) Application number: **23193445.6**

(22) Date of filing: **25.08.2023**

(51) International Patent Classification (IPC):
**B26B 15/00** (2006.01)   **A01G 3/037** (2006.01)
**A01G 3/06** (2006.01)

(52) Cooperative Patent Classification (CPC):
**B26B 15/00; A01G 3/037; A01G 3/067**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.09.2022   CN 202211074536**
**03.09.2022   CN 202222356325 U**
**19.07.2023   CN 202310886484**

(71) Applicant: **DongGuan Koham Industrial Co., Ltd.**
**Dongguan City, Guangdong 523000 (CN)**

(72) Inventor: **Ma, Xianpeng**
**Dongguan City, 523000 (CN)**

(74) Representative: **Cleanthous, Marinos**
**IOANNIDES CLEANTHOUS AND CO LLC**
**4 Prometheus Street, 3 Floor**
**1065 Nicosia (CY)**

(54) **SIGNAL GENERATOR BASED ON INDUCTANCE CHARACTERISTICS OF ELEMENT, ELECTRIC SHEARING TOOL, AND SHEAR OPENING DEGREE CONTROL METHOD FOR ELECTRIC SHEARING TOOL**

(57)    The present disclosure discloses a signal generator based on inductance characteristics of an element, an electric shearing tool, and a shear opening degree control method for an electric shearing tool, and relates to the technical field of electric shearing tools. A changeable inductance value of an inductance type transducer is obtained through a change in a relative position between a triggering member and the inductance type transducer. The inductance value is increased or decreased linearly, so that a control processor can precisely obtain relative position information between the triggering member and the inductance type transducer according to linear changes of the inductance value, thereby obtaining position information of a blade travel control member. Each position point can be mapped to current positions of blades. Furthermore, since the inductance type transducer and the triggering member are used for control and detection, the following problem can be avoided during mounting: the production efficiency is affected because an S pole or an N pole of a magnet needs to be confirmed during mounting after the type of an existing linear Hall element is selected. The mounting convenience is better.

**FIG. 6**

## Description

## TECHNICAL FIELD

The present disclosure relates to the technical field of electric shearing tools, and particularly to, a signal generator based on inductance characteristics of element, an electric shearing tool, and a shear opening degree control method for an electric shearing tool.

## BACKGROUND

A position of a blade of an existing pruning shear is mainly controlled using a Hall element induction magnet based on a Hall effect. The working principle is as follows: The Hall effect is essentially a deflection caused by the Lorentz force acting on a moving charged particle in a magnetic field. When the charged particle (an electron or a hole) is constrained in a solid material, this deflection leads to accumulation of positive and negative charges in a direction perpendicular to a current and the magnetic field, thereby forming an additional transverse electric field which is referred to as the Hall electric field. A distance between a trigger magnet and a Hall element can be determined by detecting a magnitude of an electromotive force of an electric field using a modern technology, thereby associating a trigger of a pruning shear with a position of a blade and achieving control of the position of the blade of the pruning shear.

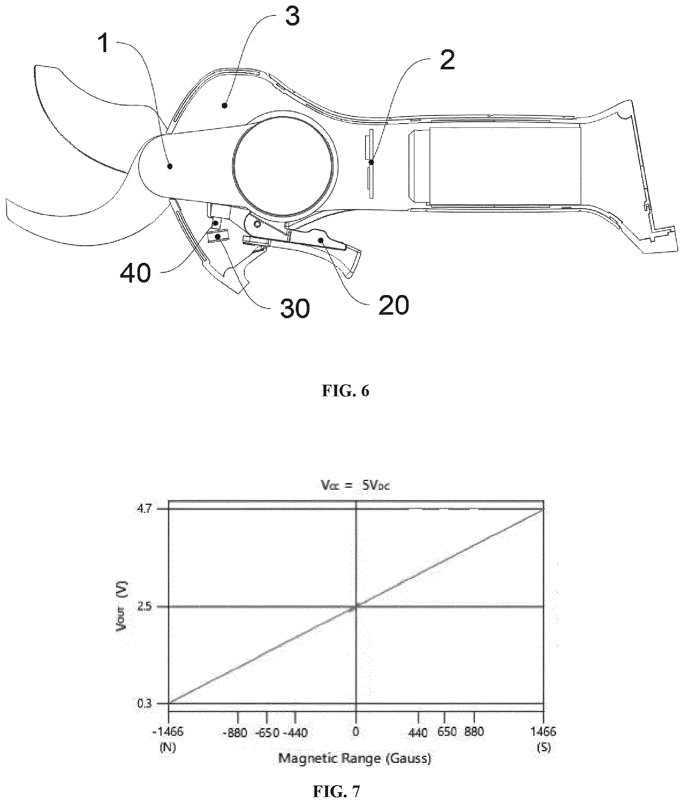

A linear Hall effect IC responds proportionally to a magnetic flux density. As shown in FIG. 7, it is assumed that a signal output range of a linear Hall element is 0 V to Vout. When there is no magnetic field, an analog output drive ½ is Vout. Induction of north and south magnetic poles generates a unique voltage. Therefore, after the type of a linear Hall element is selected, it is necessary to confirm an S pole or an N pole of a magnet during mounting. Therefore, the existing electric pruning shear that use the Hall element induction magnet to control the position of the blade is not convenient to mount, and a control portion of the existing electric pruning shear needs to be improved.

The induction of the north and south magnetic poles generate the unique voltage, which affects the linearity of the Hall element induction magnet. If the position of the blade of the electric scissors is controlled through the Hall element induction magnet, the linearity needs to be processed by a micro control unit (MCU) via complex mathematical calculation, making it difficult to achieve a random movement effect.

## SUMMARY

In order to overcome the above deficiencies, the present disclosure aims to provide a technical solution capable of addressing the aforementioned issues.

In order to achieve the above purposes, the present disclosure provides the following technical solution:

A signal generator based on inductance characteristics of an element includes a signal generator mounted on an electric tool; the signal generator includes a base plate, a manual actuator, an air core inductor, and a magnetizer; the manual actuator is movably connected to the base plate; fixed portions are arranged on both the manual actuator and the base plate; the two fixed portions moves relatively close to each other or away from each other through movement of the manual actuator; the air core inductor and the magnetizer are respectively connected to the two fixed portions; and the magnetizer is plugged along a middle portion of the air core inductor or is separated along the middle portion of the air core inductor through the movement of the two fixed portions close to each other or away from each other.

Compared with the prior art, the present disclosure has the following beneficial effects: The manual actuator is manually driven to move on the basis of a position movably connected to the base plate, so that the fixed portion on the manual actuator acts, and the two fixed portions move close to each other or away from each other through the movement of the manual actuator. Due to this structural feature, the air core inductor and the magnetizer are respectively connected to the two fixed portions, so that the magnetizer is plugged along the middle portion of the air core inductor or is separated along the middle portion of the air core inductor when the two fixed portions move close to each other or away from each other. When the manual actuator is pulled and released, the whole magnetizer is correspondingly plugged into and separated from the air core inductor. By means of the movement, the magnetic conductivity of a magnetizer material of the air core inductor is changed, thereby changing an inductance value of the air core inductor. That is, the air core inductor and the magnetizer are separately mounted, and the objective of changing the inductance value of the air core inductor can be achieved by changes in a relative distance between the magnetizer and the air core inductor, and the inductance value is changed linearly.

The present disclosure further provides the following technical solution:

A shear opening degree control method for an electric shearing tool is provided. The shear opening degree control method includes:

in a first step, controlling a blade travel control member to move in a forward direction, a reverse direction, or alternately in a forward direction and a reverse direction along a designated path, so that a relative position between an inductance type transducer and a triggering member changes;
in a second step, generating, by the inductance type transducer, a corresponding inductance value according to the relative position of the triggering member;
in a third step, obtaining, by a control processor, the inductance value of the inductance type transducer, determining a current movement position of the blade travel control member according to the inductance value, determining a current relative position between the triggering member and the inductance type transducer, and outputting a control signal corresponding to a position of the blade travel control member to an electric drive member of an electric drive component according to determined position information; and

in a fourth step, driving, by the electric drive component, blades to reach designated positions, and changing a shear opening degree formed by a first blade and a second blade.

The present disclosure further provides the following technical solution:

An electric shearing tool includes a main body of the electric shearing tool; the main body of the electric shearing tool is provided with:

a first blade and a second blade cooperating with each other for shearing, wherein the first blade and the second blade cooperate with each other to shear an object to be sheared;

an electric drive component, wherein the electric drive component at least drives one blade to adjust a shear opening degree formed by the first blade and the second blade;

a blade travel control member, wherein the blade travel control member moves in a reciprocating manner according to a designated path to achieve forward and reverse movements;

a triggering member;

an inductance type transducer; and

a control processor, configured to receive an inductance value generated by the inductance type transducer and control a drive distance and drive direction of the electric drive component to the blades according to the inductance value,

wherein the triggering member or the inductance type transducer is mounted on the blade travel control member; when the blade travel control member moves along the designated path, the blade travel control member drives the triggering member or the inductance type transducer to change a relative position between the triggering member and the inductance type transducer, so that the inductance type transducer inducts changes of the inductance value generated by the triggering member.

Compared with the prior art, the present disclosure has the following beneficial effects.

According to the electric shearing tool and the shear opening degree control method for the electric shearing tool, a changeable inductance value of the inductance type transducer is obtained by changing the relative position between the triggering member and the inductance type transducer. As the inductance value is increased and decreased linearly, the control processor can obtain the current relative position information between the triggering member and the inductance type transducer after judging the inductance value, thereby mapping the relative position information position to the positions of the blades; and the positions of the blades echo the blade travel control member.

The control processor can precisely obtain relative position information between the triggering member and the inductance type transducer according to linear changes of the inductance value, thereby obtaining position information of the blade travel control member. Each position point can be mapped to current positions of the blades. Furthermore, since the inductance type transducer and the triggering member are used for control and detection, the following problem can be avoided during mounting: the production efficiency is affected because an S pole or an N pole of a magnet needs to be confirmed during mounting after the type of an existing linear Hall element is selected. The mounting convenience is better.

The additional aspects and advantages of the prevent disclosure will be provided in the following descriptions, part of which will become apparent from the following descriptions or be learned through the practice of the prevent disclosure.

## BRIEF DESCRIPTION OF THE DRAWINGS

To describe the embodiments of the present disclosure or the technical solutions in the existing art more clearly, drawings required to be used in the embodiments or the illustration of the existing art will be briefly introduced below. Obviously, the drawings in the illustration below are only some embodiments of the present disclosure. Those ordinarily skilled in the art also can acquire other drawings according to the provided drawings without doing creative work.

FIG. 1 is a schematic structural diagram of a first embodiment of a signal generator in the present disclosure;

FIG. 2 is a schematic structural diagram of a second embodiment of a signal generator in the present disclosure;

FIG. 3 is a schematic structural diagram of a third embodiment of a signal generator in the present disclosure;

FIG. 4 is a schematic structural diagram of a fourth embodiment of a signal generator in the present disclosure;

FIG. 5 is a schematic structural diagram of a fifth embodiment of a signal generator in the present disclosure;

FIG. 6 is a schematic structural diagram of an electric tool in the present disclosure;

FIG. 7 is a schematic diagram of linear changes of an existing linear Hall effect;
FIG. 8 is a flowchart of a shear opening degree control method according to the present disclosure;
FIG. 9 is a schematic diagram of an internal structure of an electric shearing tool in the present disclosure;
FIG. 10 is a schematic diagram of another internal structure of an electric shearing tool in the present disclosure;
FIG. 11 is a schematic circuit diagram of a signal conditioning circuit in the present disclosure;
FIG. 12 is a sample graph of waveform changes corresponding to a signal conditioning circuit in the present disclosure;
FIG. 13 is a flowchart of outputting a converted frequency in the present disclosure;
FIG. 14 is a flowchart of receiving a frequency for shear opening degree control in the present disclosure; and
FIG. 15 is a schematic circuit diagram of an oscillation circuit in the present disclosure.

## DETAILED DESCRIPTION OF THE EMBODIMENTS

The technical solutions in the embodiments of the present disclosure will be described clearly and completely below in combination with the accompanying drawings of the embodiments of the present disclosure. Apparently, the described embodiments are only part of the embodiments of the present disclosure, not all embodiments. All other embodiments obtained by those of ordinary skill in the art based on the embodiments in the present disclosure without creative work shall fall within the protection scope of the present disclosure.

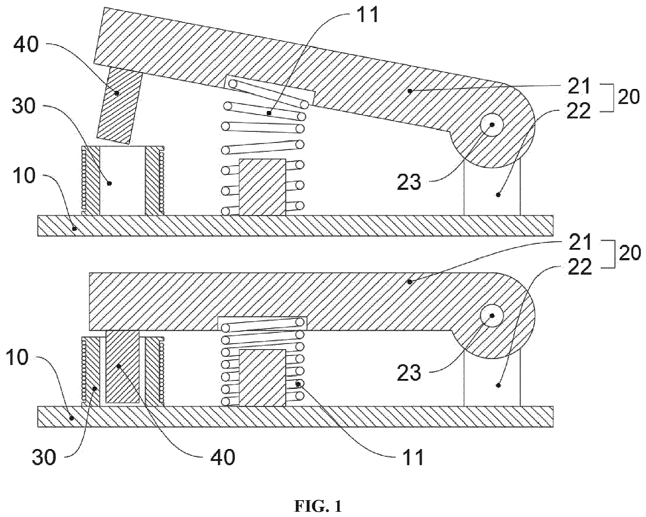

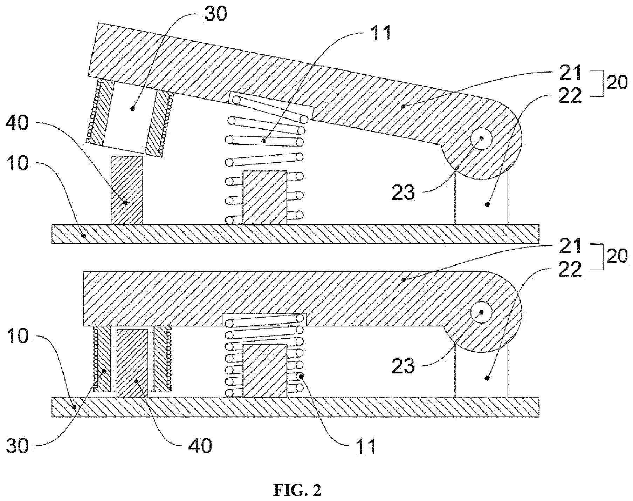

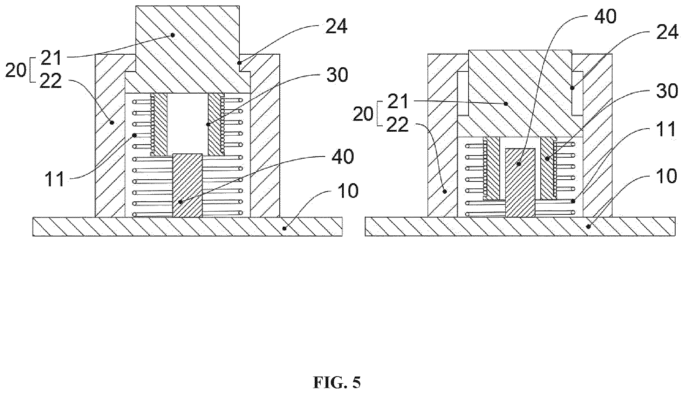

Referring to FIG. 1 to FIG. 6, the embodiments of the present disclosure are achieved using an inductor to induct a magnetizer 40. A structure of the inductor is generally composed of a framework, a winding, a shielding cover, a packaging material, and the magnetizer 40. The present disclosure changes an inductance value on the basis of a relative position between the magnetizer 40 and a coil. When the magnetizer 40 is completely separated from the coil, air serves as a medium of the magnetizer 40. When the magnetizer 40 is slowly plugged into a gap in the middle of the coil, the inductance value also changes as the magnetizer 40 moves. According to the above principle, the magnetizer 40 is fixed on a trigger of a pruning shear according to the drawings, and the coil is also fixed at a corresponding reasonable position. Specifically, the present disclosure adopts a signal generator based on inductance characteristics of an element, including a signal generator mounted on an electric tool. The signal generator includes a base plate 10, a manual actuator 20, an air core inductor 30, and a magnetizer 40; the manual actuator 20 is movably connected to the base plate 10; fixed portions are arranged on both the manual actuator 20 and the base plate 10; the two fixed portions moves relatively close to each other or away from each other through movement of the manual actuator 20; the air core inductor 30 and the magnetizer 40 are respectively connected to the two fixed portions; and the magnetizer 40 is plugged along a middle portion of the air core inductor 30 or is separated along the middle portion of the air core inductor 30 through the movement of the two fixed portions close to each other or away from each other.

By means of the above technical solution, during use, the manual actuator 20 is manually driven to move on the basis of a position movably connected to the base plate 10. The manual actuator 20 includes a moving component 21 and a connector 22; the moving component 21 is movably connected to the base plate 10 through the connector 22; and the fixed portion of the manual actuator 20 is arranged on the moving component 21, so that the fixed portion on the manual actuator 20 acts, and the two fixed portions move close to each other or away from each other through the movement of the manual actuator 20. The movement of the manual actuator 20 is usually achieved by manual pulling, twisting, pressing, pulling, and the like. The base plate 10 carries a first reset spring 11 abutted with the moving component 21. The moving component 21 is reset through the first reset spring 11. Due to this structural feature, the air core inductor 30 and the magnetizer 40 are respectively connected to the two fixed portions, so that the magnetizer 40 is plugged along the middle portion of the air core inductor 30 or is separated along the middle portion of the air core inductor 30 when the two fixed portions move close to each other or away from each other. The relative position between the magnetizer 40 and the air core inductor 30 is changed to change the inductance value.

FIG. 1 to FIG. 2 show a first embodiment and a second embodiment of the signal generator in the present disclosure. The moving component 21 can move in a manner of being rotatably connected to the base plate 10. The connector 22 is fixed on the base plate 10; the connector 22 is provided with a rotating shaft structure 23; the moving component 21 rotates around the rotating shaft structure 23; the air core inductor 30 and the magnetizer 40 can be respectively arranged on the moving component 21 and the base plate 10; and the air core inductor 30 and the magnetizer 40 can also be respectively arranged on the base plate 10 and the moving component 21. They are arranged according to an actual need.

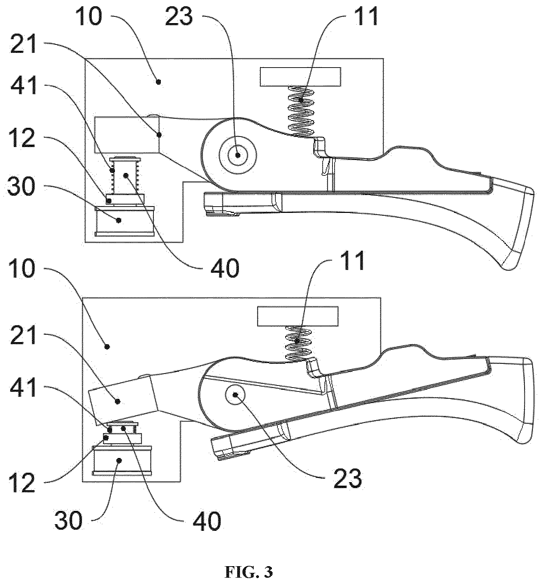

FIG. 3 shows a third embodiment of the signal generator in the present disclosure. Due to the arrangement of this structure, a movement trajectory of the fixed portion is an arc when the moving component 21 moves. As a result, the magnetizer 40 cannot be plugged along a center of the air core inductor 30 or cannot be separated along the center of the air core inductor 30. Therefore, the air core inductor 30 can be fixedly connected to the fixed portion of the base plate 10, and the magnetizer 40 is in drive connection to the fixed portion of the moving component 21. A guide sleeve 12 is arranged on the base plate 10; the magnetizer 40 is in guide connection to the guide sleeve 12; and the magnetizer 40 is plugged along the center of the air core inductor 30 or is separated along the center of the air core inductor 30 through the guide sleeve 12. By using the structure of the guide sleeve 12, a moving direction of the magnetizer 40 can be restrained. The magnetizer 40 and the moving component 21 are in drive connection. If a resisting pushing manner is used, a second reset spring 41 abutted with the guide sleeve 12 needs to be arranged on the magnetizer 40; and the magnetizer 40 is reset through the second reset spring 41. In addition, in order to simulate a pulling structure of a trigger by using the manual actuator 20, the fixed portion is arranged at one end of the moving component 21. A middle portion of the moving component 21 is in running fit with a rotating shaft structure 23, and the other end of the moving component 21 is used as a manual actuation end, so that the manual actuator 20 is manually pulled to act.

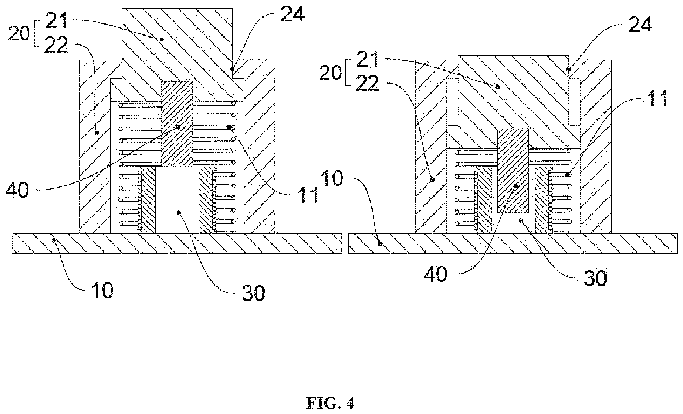

FIG. 4 to FIG. 5 show a fourth embodiment and a fifth embodiment of the signal generator in the present disclosure. The moving component 21 can move in a manner of being slidably connected to the base plate 10. The connector 22 is fixed on the base plate 10. The connector 22 is provided with a guide hole structure 24. The moving component 21 is slidably connected to the guide hole structure 24. An upper end of the moving component 21 is used as a manual actuation end. The fixed portion is arranged at a lower end of the moving component. In the same way, the air core inductor 30 and the magnetizer 40 can be respectively arranged on the moving component 21 and the base plate 10, and the air core inductor 30 and the magnetizer 40 can also be respectively arranged on the base plate 10 and the moving component 21.

Referring to FIG. 6, in actual applications, an inductance value calculation formula is as follows:

$$L = N2\mu A/l$$

where L represents an inductance value; N represents a number or turns of the coil; $\mu$ represents the magnetic conductivity of the magnetizer; A represents a cross-sectional area of the magnetizer; 1 represents a length of the coil. It can be obtained according to the above formula that the inductance value of the air core inductor 30 is in direct proportion to the magnetic conductivity of the magnetizer. When the magnetic conductivity of the magnetizer increases, the inductance value increases linearly. On the contrary, when the magnetic conductivity of the magnetizer decreases, the inductance value also decreases linearly. The signal generator is applied to an electric tool. The electric tool used in the present disclosure may be a pair of electric scissors, a pair of electric pliers, an electric saw, and the like, which includes the abovementioned signal generator based on the inductance characteristics of the element, and further includes a main body 3. A working head 1 is arranged at a front end of the main body 3. A circuit control unit 2 is arranged in the main body 3. The signal generator is mounted on the main body 3. The signal generator and the working head 1 are both electrically connected to the circuit control unit 2. The signal generator is in fixed fit with the main body 3 through the base plate 10, or the base plate 10 is directly integrally formed with the main body 3, so that the air core inductor 30 is arranged in the main body 3, and the magnetizer 40 is arranged at one end of the manual actuator 20. The other end of the manual actuator 20 is used as a manual actuation end and is exposed out of the main body 3. A middle portion of the manual actuator 20 is movably connected to the main body 3.

A pair of electric scissors is taken as an example. The working head 1 of the electric scissors is an electric scissors head. The circuit control unit 2 of the electric scissors is electrically connected to an air core inductor 30, and a magnetizer 40 is mounted on the manual actuator 20 of the electric scissors. The manual actuator 20 of the electric scissors is usually of a trigger structure. When the manual actuator 20 is in a released state, the magnetizer 40 is separated from the air core inductor 30.

When the manual actuator 20 is repeatedly actuated, the magnetizer 40 may be correspondingly plugged into the air core inductor 30 and cannot move. A moving speed of the magnetizer 40 in the air core inductor 30 is related to related actions of pulling and releasing the manual actuator 20.

In summary, when the manual actuator i20 s pulled and released, the whole magnetizer 40 is correspondingly plugged into and separated from the air core inductor 30. By means of the movement, the magnetic conductivity of a magnetizer material of the air core inductor 30 is changed, thereby changing the inductance value of the air core inductor 30. The inductance value is changed linearly.

Therefore, in order to overcome the technical defects of current use of a Hall element, the air core inductor 30 and the magnetizer 40 are separately mounted. The objective of changing the inductance value of the air core inductor 30 can be achieved by changes in a relative distance between the magnetizer 40 and the air core inductor 30. Based on this manner, a micro control unit (MCU) successfully detects the change of the inductance value through the corresponding signal conditioning circuit, so that a current operation movement range of the manual actuator 20 is perfectly determined. More importantly, the MCU can perfectly detect the relative distance between the magnetizer 40 and the air core inductor 30. Each distance point can be mapped to current positions of blades of the electric scissors, so that the positions of the blades of the electric scissors correspond to the position of the manual actuator 20, and the blades can move at will.

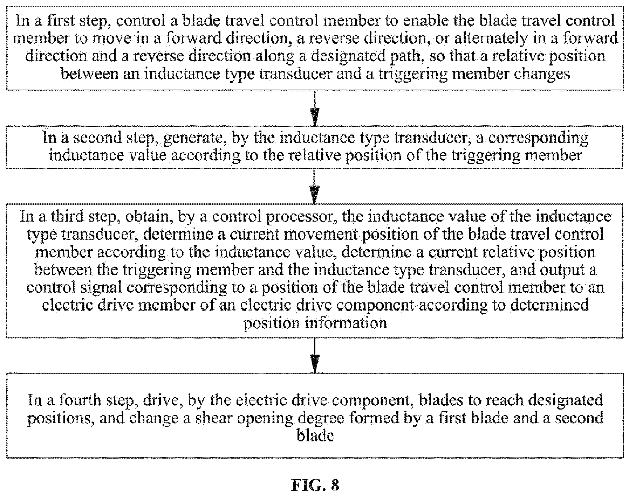

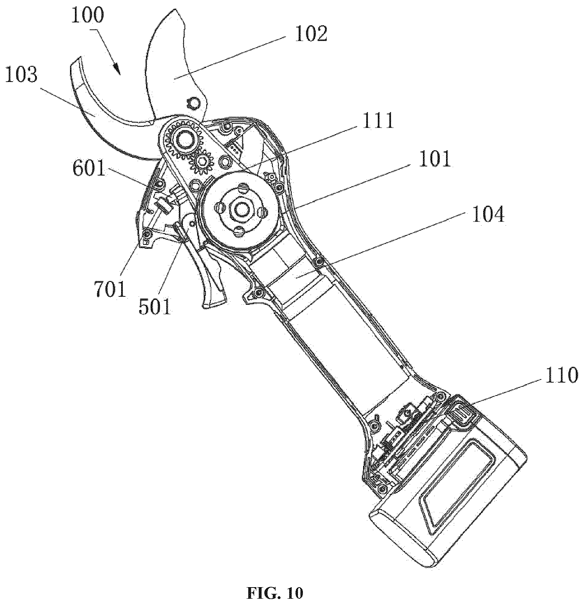

Referring to FIG. 8 to FIG. 15, a shear opening degree control method for an electric shearing tool is provided. The shear opening degree control method includes:

in a first step, controlling a blade travel control member to move in a forward direction, a reverse direction, or alternately in a forward direction and a reverse direction along a designated path, so that a relative position between an inductance type transducer and a triggering member changes;
in a second step, generating, by the inductance type transducer, a corresponding inductance value according to the relative position of the triggering member;
in a third step, obtaining, by a control processor, the inductance value of the inductance type transducer, determining a current movement position of the blade travel control member according to the inductance value, determining a current relative position between the triggering member and the inductance type transducer, and outputting a control signal corresponding to a position of the blade travel control member to an electric drive member of an electric drive component according to determined position information; and
in a fourth step, driving, by the electric drive component, blades to reach designated positions, and changing a shear opening degree formed by a first blade and a second blade.

According to the shear opening degree control method for the electric shearing tool, a changeable inductance value of the inductance type transducer is obtained by changing the relative position between the triggering member and the inductance type transducer. As the inductance value is increased and decreased linearly, the control processor can obtain the current relative position information between the triggering member and the inductance type transducer after judging the inductance value, thereby mapping the relative position information position to the positions of the blades; and the positions of the blades echo the blade travel control member.

The control processor can precisely obtain relative position information between the triggering member and the inductance type transducer according to linear changes of the inductance value, thereby obtaining position information of the blade travel control member. Each position point can be mapped to current positions of the blades. Furthermore, since the inductance type transducer and the triggering member are used for control and detection, the following problem can be avoided during mounting: the production efficiency is affected because an S pole or an N pole of a magnet needs to be confirmed during mounting after the type of an existing linear Hall element is selected. The mounting convenience is better.

Preferably, the control processor obtains the inductance value of the inductance type transducer in real time.

The following electric shearing tool can be innovatively obtained on the basis of the above shear opening degree control method, or it can be understood that the above shear opening degree control method is innovatively obtained on the basis of the following electric shearing tool. The electric shearing tool is set as follows:

An electric shearing tool includes an electric shearing tool main body 101. The electric shearing tool main body 101 is provided with:

a first blade 102 and a second blade 103 cooperating with each other for shearing, wherein the first blade 102 and the second blade 103 cooperate with each other to shear an object to be sheared (such as a branch);
an electric drive component 104, wherein the electric drive component 104 at least drives one blade (the first blade and/or the second blade) to adjust a shear opening degree formed by the first blade 102 and the second blade 103;
a blade travel control member 105, wherein the blade travel control member 105 moves in a reciprocating manner according to a designated path to achieve forward and reverse movements;
a triggering member 106;
an inductance type transducer 107; and
a control processor 108, configured to receive an inductance value generated by the inductance type transducer 107 and control a drive distance and drive direction of the electric drive component 104 to the blades according to the inductance value,
wherein the triggering member 106 or the inductance type transducer 107 is mounted on the blade travel control member 105; when the blade travel control member 105 moves along the designated path, the blade travel control member 105 drives the triggering member 106 or the inductance type transducer 107 to change a relative position between the triggering member 106 and the inductance type transducer 107, so that the inductance type transducer 107 inducts changes of the inductance value generated by the inductance type transducer 106.

Preferably, the electric shearing tool main body is further provided with a speed changer (not shown). The blade travel control member corresponds to an output end of the speed changer. A user manipulator is arranged at an input end of the speed changer. When a user operates the user manipulator in a manner of pushing, rotating, pulling, and the like, the speed changer correspondingly causes the blade travel control member to move due to mechanical drive. A response (such as enlarging a movement range or reducing a movement range) of the blade travel control member is changed by the speed changer, so that it is easier for the user to control the shear opening degree to a desired opening degree.

An electric drive member of the electric drive component 104 is usually a motor. Power is output through the motor. Clockwise and counterclockwise rotations of the motor can finally cause the corresponding blade to move in a forward direction and a reverse direction. The motor can only drive one blade, or can drive the two blades at the same time. When the motor drives the blade, the power output by the motor can finally reach the blade through a gearbox 111, so as to change a torque, a speed, or a direction.

When the electric drive component 104 only drives one blade, for example, when the blade driven is the first blade 102, the first blade 102 is correspondingly a movable blade, and the second blade 103 is correspondingly a fixed blade. The second blade 103 is mounted on the electric shearing tool main body 101. The first blade 102 can be driven by the electric drive component 104 in a rotating manner. For example, the first blade is rotatably arranged on the electric shearing tool main body through a rotating shaft, or the first blade rotatably sleeves a rotating shaft of the electric shearing tool main body, or the first blade is connected to a power output shaft. The power output shaft can be an output shaft of the motor or an output shaft of the gearbox.

The electric drive member of the electric drive component 104 can also be an electric push rod, a cylinder, a hydraulic cylinder, an electric main shaft, or the like, which has a forward and reverse drive function.

The inductance type transducer 107 can adopt a commonly used variable-clearance inductance transducer, a variable-area inductance transducer, or a solenoid insert type inductance transducer.

The blade travel control member 105 can be moved in the following ways: pressing, for example, it is a button with a reset function; pushing, for example, it is a sliding sleeve or a sliding push rod; rotating, for example it is a trigger, a knob, a rotatable grip, and the like.

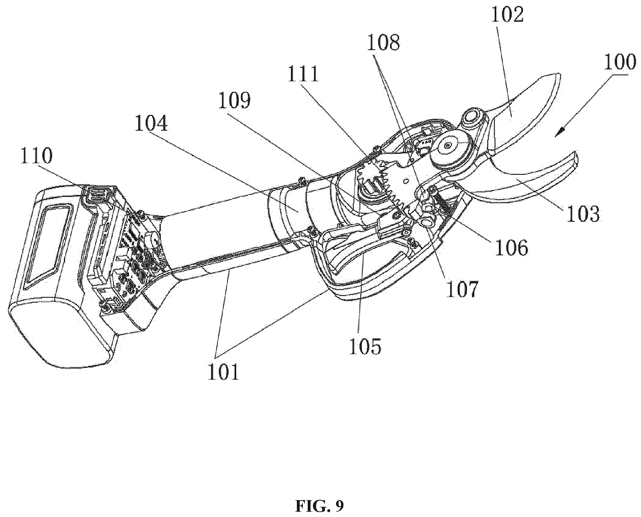

A specific movement way of the blade travel control member of the electric shearing tool and a specific setting of the inductance type transducer can be randomly matched in the above listed solutions and in accordance with directly obtained similar solutions. An embodiment of the electric shearing tool after the matching can be as shown in FIG. 9 to FIG. 10.

The blade travel control member is a trigger 501 rotatably arranged on the electric shearing tool main body 101. The inductance type transducer is a toroidal air core inductor or an inductance coil 701 mounted on the electric shearing tool main body 101. The triggering member is a magnetizer 601 mounted on the trigger. When the trigger 501 rotates, the magnetizer 601 is in a moving state of being plugged into the toroidal air core inductor or the inductance coil 701, or the magnetizer 601 is in a moving state of being separated from the toroidal air core inductor or the inductance coil 701.

When the trigger 501 is pulled, the magnetizer 601 is driven by the rotating trigger 501, so that a relative position between the magnetizer 601 and the toroidal air core inductor or the inductance coil 701 changes, and an inductance value generated by the toroidal air core inductor or the inductance coil 701 changes. The control processor 108 obtains the inductance value generated by the toroidal air core inductor or the inductance coil 701, determines a current rotating position of the trigger 501 according to the inductance value, determines a relative position between the magnetizer 601 and the toroidal air core inductor or the inductance coil 701, and outputs, according to the determined position information, a control signal corresponding to the position of the blade travel control member to the electric drive member of the electric drive component 104 (namely, drive the blade to the corresponding position), thereby adjusting a shear opening degree 100 formed by the first blade 102 and the second blade 103 to a corresponding opening degree.

The change of the relative position between the magnetizer 601 and the toroidal air core inductor or the inductance coil 701 is as follows:

1) When the blade travel control member moves in a forward direction according to a designated path, the magnetizer 601 is in the moving state of being plugged into the toroidal air core inductor or the inductance coil 701; and when the blade travel control member moves in a reverse direction according to the designated path, the magnetizer 601 is in the moving state of being separated from the toroidal air core inductor or the inductance coil 701.

Or,

2) When the blade travel control member moves in a forward direction according to a designated path, the magnetizer 601 is in the moving state of being separated from the toroidal air core inductor or the inductance coil 701; and when the blade travel control member moves in a reverse direction according to the designated path, the magnetizer 601 is in the moving state of being plugged into the toroidal air core inductor or the inductance coil 701.

In this embodiment, the foregoing action that the blade travel control member moves according to the designated path can be understood as follows: The trigger 501 rotates by taking the electric shearing tool main body 101 as a support. The forward direction may be a rotating direction of the trigger when the trigger is pulled.

As a shear opening degree adjustment action, when the trigger 501 is pulled, the shear opening degree between the first blade 102 and the second blade 103 is decreased, showing a sheared state of the object to be sheared.

The magnetizer is preferably a magnetic core, or a metal piece with high magnetic conductivity, such as iron, nickel, and manganese.

Preferably, the electric shearing tool is also provided with an elastic member 109. The elastic member 109 corresponds to the trigger 501. When a user pulls the trigger 501, the elastic member 109 undergoes elastic deformation through a force exerted by the trigger 501. When the user releases the trigger 501, the elastic member 109 recovers from the elastic deformation and drives the trigger 501 to be automatically reset. The elastic member can use an elastic object such as a pressure spring, a tension spring, a torsion spring, and a clip.

In the same way, as the same or similar implementation, the mounting position of the magnetizer 601 and the mounting position of the toroidal air core inductor or the inductance coil 701 are interchangeable, that is, the magnetizer 601 is mounted on the electric shearing tool main body 101, and the toroidal air core inductor or the inductance coil 701 is mounted on the trigger 501.

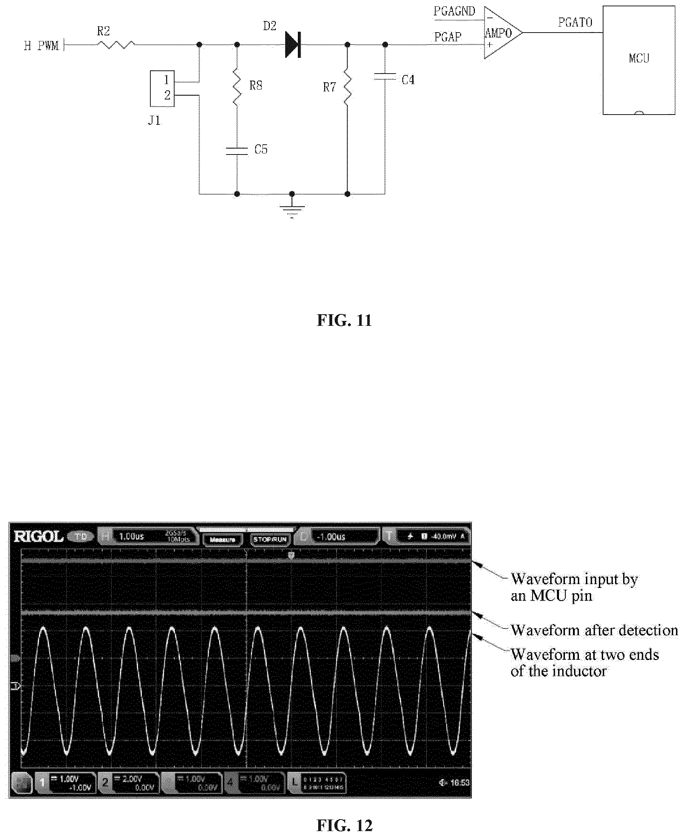

In this embodiment, in order to enable the control processor 108 to obtain the inductance value information of the toroidal air core inductor or the inductance coil 701, the control processor (MCU) is provided with a signal conditioning circuit. The signal conditioning circuit includes a second-order integration circuit, a detection circuit, and an operational amplifier. The second-order integration circuit is configured to convert square waves into sine waves, and positive and negative amplitude values of the sine wave vary as the inductance value of the inductance type transducer changes. The detection circuit is configured to convert the sine wave converted by the second-order integration circuit into a relatively stable direct-current voltage. The operational amplifier is configured to amplify the direct-current voltage obtained by the detection circuit and finally input the direct-current voltage to the control processor (MCU) for sampling and analog-digital conversion, and the control processor (MCU) more accurately determines the relative position between the magnetizer and the toroidal air core inductor or the inductance coil. Waveform changes can be seen in FIG. 12, it should be noted that the waveform changes shown in FIG. 12 should be understood as an example, and the waveform can correspondingly change as a frequency, amplitude, and other data changes.

As shown in FIG. 11, the second-order integration circuit includes a resistive load R2, a resistive load R8, and a capacitive load C5. The detection circuit includes a diode D2, a resistive load R7, and a capacitive load C4. A square wave with a frequency of 1 Mhz, an amplitude of 5 V, and a duty cycle of 50%, which is input from an H PWM terminal, is taken as an example: The resistive load R2, the resistive load R8, and the capacitive load C5 cooperate with the toroidal air core inductor or the inductance coil (J1 in FIG. 11) to transform the square wave into a sine wave, and the positive and negative amplitude values of the sine wave change as the inductance value of the toroidal air core inductor or the inductance coil changes. When the inductance value of the toroidal air core inductor or the inductance coil increases, the amplitude values of the sine wave decrease. The diode D2 is in a microconduction state. After the sine wave obtained from the aforementioned transformation passes through the detection circuit, the sine wave becomes a relatively stable direct-current voltage, and the direct-current voltage follows the positive amplitude value of the aforementioned sine wave. Finally, a weak direct-current voltage output by the detection circuit enters the operational amplifier AMP0. After the operational amplifier AMP0 amplifies the direct-current voltage, the direct-current voltage is input to the control processor (MCU) for sampling and AD conversion.

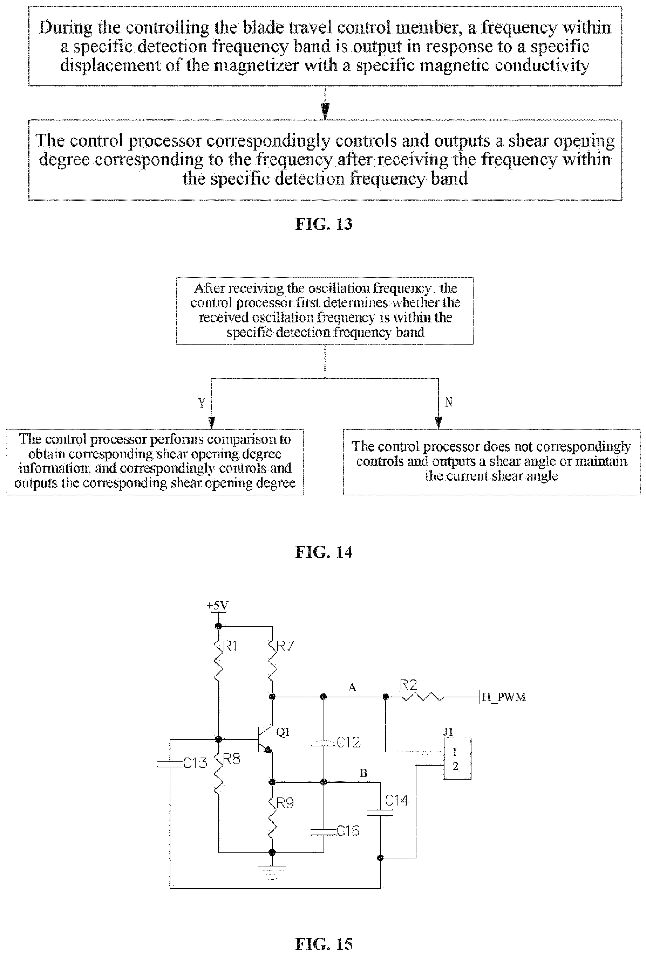

Referring to FIG. 13 to FIG. 15 for details, in this embodiment, in order to ensure that the reliability and stability of the inductance type transducer are better when the inductance type transducer is applied to controlling the shear opening degree of the electric shearing tool are in a good state and in order to cause the inductance type transducer can better adapt to the control of the shear opening degree:

The control processor is provided with an oscillation circuit that is matched with the toroidal air core inductor or the inductance coil. The inductance value generated by the toroidal air core inductor or the inductance coil according to the relative position of the magnetizer is correspondingly converted into the oscillation frequency, and the oscillation frequency is correspondingly changed by changing a displacement of the magnetizer. When the blade travel control member moves, a frequency within a specific detection frequency band is output in response to a specific displacement of the magnetizer with a specific magnetic conductivity; and the control processor correspondingly controls and outputs a shear opening degree corresponding to the frequency after receiving the frequency within the specific detection frequency band.

An inductance value calculation formula is as follows:

$$L = N^2 \mu A / l$$

where L represents an inductance value; N represents a number or turns of the coil; $\mu$ represents the magnetic conductivity of the magnetizer; A represents a cross-sectional area of the magnetizer; 1 represents a length of the coil.

According to the electric shearing tool that can be used for long time, the coil will usually not be replaced during normal use. According to the above formula, it is obtained that in actual applications, the inductance value is mainly determined by the magnetic conductivity of the magnetizer, the cross-sectional area of the magnetizer, and a depth of the magnetizer entering the coil. That is, when a distance of the magnetizer with a specific cross-sectional area and specific magnetic conductivity in the coil is a value (namely, the above specific displacement) within a specific range, the inductance value generated is a specific inductance value, and the specific inductance value is converted by the oscillation circuit into the frequency within the specific detection frequency band. When applied to electric scissors that can be held with a single hand, the magnetizer can use a cylindrical Ni-Zn ferrite with a diameter of 3 mm.

The electric shearing tool works in a very complex environment. For example, when a fragment with the same magnetic conductivity and a different cross-sectional area accidentally falls into the coil, or a fragment with the same cross-sectional area and different magnetic conductivity accidentally falls into the coil, injury or loss is easily caused once the electric shearing tool is triggered for shearing by mistake. Therefore, to control the shear opening degree of the electric shearing tool, particularly the shear opening degree of an electric shearing tool for pruning, a control system for the electric shearing tool is required to be able to reliably and stably identify whether there is a triggering member enters, so as to reduce injury or loss. Therefore, due to the arrangement of the specific detection frequency band, the shear opening degree is correspondingly controlled only when the control processor obtains the frequency within the specific detection frequency band, which eliminates the influence of a frequency outside the specific detection frequency band on the control of the shear opening degree and effectively improves the reliability and stability of the control of the shear opening degree.

The setting of the above specific detection frequency and the control performed by the control processor on the specific detection frequency improve the reliability and stability of the control. In addition to the coil, the magnetizer, the oscillation circuit, the control processor, and other hardware, no additional hardware needs to be added for control, and only a control program is correspondingly set, which is more conductive to reducing the cost.

Further, information of all frequency points of the specific detection frequency band is pre-stored in a memory of the control processor, and each frequency point corresponds to one shear opening degree; after receiving the oscillation frequency, the control processor is configured to: first determine whether the received oscillation frequency is within the specific detection frequency band; and if the oscillation frequency is within the specific detection frequency band, perform comparison to obtain corresponding shear opening degree information, and correspondingly control and output the corresponding shear opening degree. Much further, after receiving the oscillation frequency, the control processor is configured to: if it is determined that the received oscillation frequency is not within the specific detection frequency band, skip correspondingly controlling and outputting a shear opening degree or maintain the current shear opening degree.

A shear opening degree is not controlled and output, which can indicate that the shear opening degree is recovered to an initial angle. For example, when the initial angle is set to be a maximum opening degree, if the received oscillation frequency is not a frequency within the specific detection frequency band, the control processor automatically performs the control. That is, the electric drive component drives the blade to be reset to an initial position, so that the shear opening degree is recovered to the initial maximum angle, which effectively ensures that the blade can be safely and timely withdrawn and reset, improves the safety, effectively avoids secondary injury to a person, and effectively reduces secondary damage to the electric shearing tool.

Preferably, the specific detection frequency band is a low frequency band. The electric shearing tool for pruning has a relatively high shearing force. When the specific detection frequency band is set to be the low frequency band, a quantity of pulses after conversion is proper, which counts the specific detection frequency more easily and controls the corresponding shear opening degree more accurately, so that the applicability of the inductance type transducer to controlling the shear opening degree of the electric shearing tool is better. More preferably, the specific detection frequency band is 40 KHz to 55 KHz. When the shear opening degree gradually decreases, the frequency within the specific detection frequency band gradually decreases. For example, when the obtained frequency is 55 KHz, the shear opening degree is correspondingly controlled to be maximum. When the obtained frequency is 40 KHz, the shear opening degree is correspondingly controlled to be minimum. The above frequency band is the low frequency band. A linear ratio of gradually decreasing 55 KHz to 40 KHz is closer to a ratio of the blade. The above frequency band has higher applicability when it is applied to controlling the shear opening degree of the electric shearing tool. The above specific detection frequency band is more conductive to improving the accuracy of controlling the shear opening degree.

A static working frequency for representing influence of external debris is set. The frequency within the specific detection frequency band is less than the static working frequency. Preferably, an amplitude value of oscillation is a value of a detection point that is greater than 150%, so that the interference resistance is better. When the specific detection frequency band is 40 KHz to 55 KHz, the static working frequency is preferably set to be 60 KHz. There is a relatively large safety margin between the specific detection frequency band and the static working frequency. During the control of the shear opening degree of the garden electric shearing tool for pruning, common metal debris includes copper, iron, aluminum, contaminant water, sewage, tree leaves, oil, and the like, and their influence frequency bands are all close to the static working frequency. The influence of the common debris can be effectively avoided by setting the static working frequency. That is, on the one hand, the setting and use of the above specific detection frequency band and static working frequency can ensure that the inductance type transducer has relatively good applicability and control precision when applied to controlling the shear opening degree of the electric shearing tool; and on the other hand, there is a relatively large safety margin during the setting of the static working frequency.

An oscillation circuit is preferably as shown in FIG. 15. The resistor R2 is an output current limiting resistor, which is connected to the toroidal air core inductor or the inductance coil (J1) in FIG. 15. A detection point may be point A or point B. Point A is a high-potential frequency output point, and point B is a low-potential frequency output point. A frequency is controlled in a pulse width modulation (PWM) manner.

In this embodiment of the present disclosure, the blade travel control member enables the magnetizer to move in the direction of being separated from the toroidal air core inductor or the inductance coil according to the designated path, and the magnetizer is close to an opening of the toroidal air core inductor or the inductance coil when reaching an end point, and blocks part of the opening;

the magnetizer blocks part of the opening to satisfy the following: debris with a cross section greater than or equal to a cross section of the magnetizer is unable to pass through the opening.

For example, due to the elastic member 109 and the trigger 501, when the trigger is released, the elastic member drives the trigger to be reset. The trigger is reset to correspondingly drive the magnetizer 601 to move in the direction of being separated from the toroidal air core inductor or the inductance coil. When the trigger is released, the magnetizer moves in the direction of being separated from the toroidal air core inductor or the inductance coil, but after the trigger is completely released (after the trigger is completely reset), a gap reserved between the magnetizer and the opening of the toroidal air core inductor or the inductance coil is maintained to be small. The small gap prevents debris with a cross-sectional area larger than or equal to that of the magnetizer from passing.

A reset position of the trigger can be limited by arranging a corresponding limiting member, so that after the trigger is completely released (after the trigger is completely reset), the gap reserved between the magnetizer and the opening of the toroidal air core inductor or the inductance coil is maintained to be the aforementioned small gap, and the debris with the cross-sectional area larger than or equal to that of the magnetizer cannot pass through the small gap. The phenomena of mis-identification and mis-triggering are effectively avoided. The trigger has better safety when applied to controlling the shear opening degree of the electric shearing tool.

It is worth noting that during preparation of the electric shearing tool, in order to ensure that power consumers (such as the control processor and the electric drive member of the electric drive component) of the electric shearing tool can be powered up and work normally, the electric shearing tool further includes a power supply module 110. The power supply module 110 can be configured to be connected to a mains supply, so as to supply power to the power consumers of the electric shearing tool. The power supply module 110 can also be configured to supply power to the power consumers of the electric shearing tool through a built-in storage battery.

The control processor and the electric drive component can communicate with each other in a wired or wireless manner. The wired and wireless communication technologies are common technologies, and will not be described in detail here.

For those skilled in the art, it is apparent that the present disclosure is not limited to the details of the demonstrative embodiments mentioned above, and that the present disclosure can be realized in other specific forms without departing from the spirit or basic features of the present disclosure. Therefore, from any point of view, the embodiments should be regarded as exemplary and non-limiting. The scope of the present disclosure is defined by the appended claims rather than the above description. Therefore, all changes falling within the meanings and scope of equivalent elements of the claims are intended to be included in the present disclosure. No drawing markings in claims shall be deemed to limit the claims involved.

**Claims**

1. A signal generator based on inductance characteristics of an element, comprising a signal generator mounted on an electric tool, wherein the signal generator comprises a base plate, a manual actuator, an air core inductor, and a magnetizer; the manual actuator is movably connected to the base plate; fixed portions are arranged on both the manual actuator and the base plate; the two fixed portions moves relatively close to each other or away from each other through movement of the manual actuator; the air core inductor and the magnetizer are respectively connected to the two fixed portions; and the magnetizer is plugged along a middle portion of the air core inductor or is separated along the middle portion of the air core inductor through the movement of the two fixed portions close to each other or away from each other.

2. The signal generator based on the inductance characteristics of the element according to claim 1, wherein the manual actuator comprises a moving component and a connector; the moving component is movably connected to the base plate through the connector; and the fixed portion of the manual actuator is arranged on the moving component.

3. The signal generator based on the inductance characteristics of the element according to claim 2, wherein the base plate is provided with a first reset spring abutted with the moving component; and the moving component is reset through the first reset spring.

4. The signal generator based on the inductance characteristics of the element according to claim 3, wherein the connector is fixed on the base plate; the connector is provided with a rotating shaft structure; the moving component rotates around the rotating shaft structure; the air core inductor is fixedly connected to the fixed portion of the base plate, and the magnetizer is in drive connection to the fixed portion of the moving component; a guide sleeve is arranged on the base plate; the magnetizer is in guide connection to the guide sleeve; the magnetizer is plugged along a center of the air core inductor or is separated along the center of the air core inductor through the guide sleeve; the magnetizer is connected to the fixed portion of the moving component in a resisting manner; the magnetizer is provided with a second reset spring abutted with the guide sleeve; and the magnetizer is reset through the second reset spring.

5. The signal generator based on the inductance characteristics of the element according to claim 3, wherein the connector is fixed on the base plate; the connector is provided with a rotating shaft structure, and the moving component rotates around the rotating shaft structure; the fixed portion is arranged at one end of the moving component; a middle portion of the moving component is in running fit with the rotating shaft structure; and the other end of the moving component serves as a manual actuation end.

6. The signal generator based on the inductance characteristics of the element according to claim 3, wherein the connector is fixed on the base plate; the connector is provided with a guide hole structure; the moving component is slidably connected to the guide hole structure; an upper end of the moving component is used as a manual actuation end; and the fixed portion is arranged at a lower end of the moving component.

7. A shear opening degree control method for an electric shearing tool, wherein the shear opening degree control method comprises:

in a first step, controlling a blade travel control member to move in a forward direction, a reverse direction, or alternately in a forward direction and a reverse direction along a designated path, so that a relative position between an inductance type transducer and a triggering member changes;
in a second step, generating, by the inductance type transducer, a corresponding inductance value according to the relative position of the triggering member;
in a third step, obtaining, by a control processor, the inductance value of the inductance type transducer, determining a current movement position of the blade travel control member according to the inductance value, determining a current relative position between the triggering member and the inductance type transducer, and outputting a control signal corresponding to a position of the blade travel control member to an electric drive member of an electric drive component according to determined position information; and
in a fourth step, driving, by the electric drive component, blades to reach designated positions, and changing a shear opening degree formed by a first blade and a second blade.

8. The shear opening degree control method for the electric shearing tool according to claim 7, wherein

the inductance type transducer is a toroidal air core inductor or an inductance coil mounted on an electric shearing tool main body, and the triggering member is a magnetizer mounted on the blade travel control member; or, the inductance type transducer is a toroidal air core inductor or an inductance coil mounted on the blade travel control member, and the triggering member is a magnetizer mounted on an electric shearing tool main body;
when the blade travel control member moves in the forward direction along the designated path, the magnetizer is in a moving state of being plugged into the toroidal air core inductor or inductance coil; when the blade travel control device moves in the reverse direction along the designated path, the magnetizer is in a moving state of being separated from the toroidal air core inductor or inductance coil; or, when the blade travel control member moves in the forward direction along the designated path, the magnetizer is in a moving state of being separated from the toroidal air core inductor or inductance coil; and when the blade travel control device moves in the reverse direction along the designated path, the magnetizer is in a moving state of being plugged into the toroidal air core inductor or inductance coil.

9. The shear opening degree control method for the electric shearing tool according to claim 8, wherein the control processor is provided with an oscillation circuit matched with the toroidal air core inductor or the inductance coil; an inductance value generated by the toroidal air core inductor or the inductance coil according to a relative position of the magnetizer is correspondingly converted into an oscillation frequency, and the oscillation frequency is changed by correspondingly changing a displacement of the magnetizer;

during the controlling the blade travel control member, a frequency within a specific detection frequency band is output in response to a specific displacement of the magnetizer with a specific magnetic conductivity; and the control processor correspondingly controls and outputs a shear opening degree corresponding to the frequency after receiving the frequency within the specific detection frequency band.

10. The shear opening degree control method for the electric shearing tool according to claim 9, wherein information of all frequency points of the specific detection frequency band is pre-stored in a memory of the control processor, and each frequency point corresponds to one shear opening degree; after receiving the oscillation frequency, the control processor is configured to: first determine whether the received oscillation frequency is within the specific detection frequency band; if the oscillation frequency is within the specific detection frequency band, perform comparison to obtain corresponding shear opening degree information, and correspondingly control and output the corresponding shear opening degree; and if the oscillation frequency is not within the specific detection frequency band, skip correspondingly controlling and outputting a shear opening degree or maintain the current shear opening degree.

11. The shear opening degree control method for the electric shearing tool according to claim 9, wherein the specific detection frequency band is a low frequency band.

12. The shear opening degree control method for the electric shearing tool according to claim 11, wherein a static working frequency is set to represent influence of external debris, and the frequency of the specific detection frequency band is less than the static working frequency.

13. The shear opening degree control method for the electric shearing tool according to claim 12, wherein the specific detection frequency band is 40 KHz-55 KHz, and the frequency of the specific detection frequency band decreases gradually as the shear opening degree gradually decreases.

14. The shear opening degree control method for the electric shearing tool according to claim 8, wherein the blade travel control member is a trigger rotatably arranged on the electric shearing tool main body;

the trigger enables the magnetizer to move in the direction of being separated from the toroidal air core inductor or the inductance coil according to the designated path, and the magnetizer is close to an opening of the toroidal air core inductor or the inductance coil when reaching an end point, and blocks part of the opening; the magnetizer blocks part of the opening to satisfy the following: debris with a cross section greater than or equal to a cross section of the magnetizer is unable to pass through the opening.

15. An electric shearing tool, comprising an electric shearing tool main body, wherein the electric shearing tool main body is provided with:

a first blade and a second blade cooperating with each other for shearing, wherein the first blade and the second blade cooperate with each other to shear an object to be sheared; an electric drive component, wherein the electric drive component at least drives one blade to adjust a shear opening degree formed by the first blade and the second blade; a blade travel control member, wherein the blade travel control member moves in a reciprocating manner according to a designated path to achieve forward and reverse movements; a triggering member; an inductance type transducer; and a control processor, configured to receive an inductance value generated by the inductance type transducer and control a drive distance and drive direction of the electric drive component to the blades according to the inductance value, wherein the triggering member or the inductance type transducer is mounted on the blade travel control member; when the blade travel control member moves along the designated path, the blade travel control member drives the triggering member or the inductance type transducer to change a relative position between the triggering member and the inductance type transducer, so that the inductance type transducer inducts changes of the inductance value generated by the triggering member.

FIG. 1

**FIG. 2**

EP 4 331 787 A2

FIG. 3

15

FIG. 4

FIG. 5

**FIG. 6**

$V_{CC} = 5V_{DC}$

**FIG. 7**

In a first step, control a blade travel control member to enable the blade travel control member to move in a forward direction, a reverse direction, or alternately in a forward direction and a reverse direction along a designated path, so that a relative position between an inductance type transducer and a triggering member changes

In a second step, generate, by the inductance type transducer, a corresponding inductance value according to the relative position of the triggering member

In a third step, obtain, by a control processor, the inductance value of the inductance type transducer, determine a current movement position of the blade travel control member according to the inductance value, determine a current relative position between the triggering member and the inductance type transducer, and output a control signal corresponding to a position of the blade travel control member to an electric drive member of an electric drive component according to determined position information

In a fourth step, drive, by the electric drive component, blades to reach designated positions, and change a shear opening degree formed by a first blade and a second blade

**FIG. 8**

**FIG. 9**

**FIG. 10**

**FIG. 11**

Waveform input by
an MCU pin

Waveform after detection

Waveform at two ends
of the inductor

**FIG. 12**

During the controlling the blade travel control member, a frequency within a specific detection frequency band is output in response to a specific displacement of the magnetizer with a specific magnetic conductivity

↓

The control processor correspondingly controls and outputs a shear opening degree corresponding to the frequency after receiving the frequency within the specific detection frequency band

**FIG. 13**

After receiving the oscillation frequency, the control processor first determines whether the received oscillation frequency is within the specific detection frequency band

Y ↓

N ↓

The control processor performs comparison to obtain corresponding shear opening degree information, and correspondingly controls and outputs the corresponding shear opening degree

The control processor does not correspondingly controls and outputs a shear angle or maintain the current shear angle

**FIG. 14**

**FIG. 15**